# EUROPEAN PATENT APPLICATION

(11) **EP 3 751 483 A1**
(43) Date of publication of application: **16.12.2020**
(21) Application number: 19179487.4
(22) Date of filing: 11.06.2019
(51) Int. Cl.: G06Q 10/08, G06Q 50/28

(54) **SYSTEM AND METHOD FOR MAILING A PACKAGING UNIT**

(71) Applicant: BASF SE, 67056 Ludwigshafen am Rhein (DE)
(72) Inventor: FEIG, Mischa, 68169 Mannheim (DE)
(74) Representative: Ortlieb, Alexander

(57) **Abstract**

System for mailing a packaging unit comprising: at least one packaging unit having at least one memory means and at least one transmitting/receiving means, wherein at least data with respect to the dimensioning of the packaging unit, the empty weight of the packaging unit and an identifier for identifying the packaging unit is stored in the memory unit; and at least one input and transmitting device which is configured to provide a data exchange with the transmitting/receiving means of the packaging unit and to read out at least the data with respect to the dimensioning of the packaging unit, the empty weight of the packaging unit and the identifier for identifying the packaging unit.

## Description

### FIELD OF THE INVENTION

The present invention relates to a system for mailing a packaging unit and to a method for mailing a packaging unit in such system.

### BACKGROUND OF THE INVENTION

Packaging units, such as cardboard boxes, parcels, are well known in the prior art and are often used to transport goods. Such packaging units are used in a wide variety of designs and sizes, and it is also known that they are made of different materials.

In modern goods traffic, the packing units are provided with stamps and labels, on which at least the recipient is specified, so that a delivery service provider can transport the packing units to the recipient, if necessary involving further delivery service providers. More recently, parcel/packaging terminals, *e.g*. Packstations or SmartPOSTs, have also been increasingly used, where packaging units can be brought in for transport or picked up by recipients. A corresponding fee for the service can, for example, be paid in form of stamps or by an electronic debit systems.

In view of this, it is found that a further need exists to simplify the mailing of such packaging units. In addition, it was found that there is a further need to provide a more environmentally friendly system and method for mailing packaging units

### SUMMARY OF THE INVENTION

In the view of the above, it is an object of the present invention to provide a system and a method for simplifying the mailing of packaging units. It is a further object of the present invention to provide a packaging unit that could be used several times as easily as possible.

These and other objects, which become apparent upon reading the following description, are solved by the subject matter of the independent claims. The dependent claims refer to preferred embodiments of the invention.

According to the invention, a system for mailing a packaging unit is provided, at least comprising: at least one packaging unit having at least one memory means and at least one transmitting/receiving means, wherein at least data with respect to the dimensioning of the packaging unit, the empty weight of the packaging unit and an identifier for identifying the packaging unit is stored in the memory unit; and at least one input and transmitting device which is configured to provide a data exchange with the transmitting/receiving means of the packaging unit and to read out at least the data with respect to the dimensioning of the packaging unit, the empty weight of the packaging unit and the identifier for identifying the packaging unit. In this respect, it is preferred that the input and transmitting device is a mobile computer device, a smartphone or a tablet.

Preferably, the packaging unit comprises on each of its sides at least one transmitting/receiving means, wherein the packaging unit preferably has a cubic shape and at least one transmitting/receiving means is provided on all six sides of the packaging unit. Moreover, is preferred that the transmitting/receiving means of the packaging unit are provided as near-field communication means, preferably as NFC tag and/or RFID tag.

Moreover, it is preferred that the system further comprises one or more databases in which personal data of an user/customer, address data of an user and/or recipients, information about service providers, terms of service providers and/or information about packaging terminals are included.

Preferably, the input and transmitting device comprises at least one inputting means configured for inputting personal data of an user, address data of an user and/or recipients, wherein the input and transmitting device is preferably configured to add these data to the one or more databases. In this respect, it is also preferred that the input and transmitting device comprises at least one displaying means for displaying at least the data inputted by means of the inputting means.

It is preferred that the input and transmitting device comprises at least one inputting means configured for inputting the packed weight of the packaging unit and to transmit the packed weight of the packaging unit to the storage means of the packaging unit and/or to transmit the packed weight of the packaging unit together with the identifier for identifying the packaging unit to the one or more databases.

Preferably, the system further comprises packaging terminals comprising several storage boxes each configured to receive one or more packaging units, wherein the packaging terminals comprise transmitting/receiving means configured to provide a data exchange with the transmitting/receiving means of the packaging unit and to read out at least the data with respect to the dimensioning of the packaging unit and the identifier for identifying the packaging unit, wherein the packaging terminals are preferably configured to automatically open a suitable storage box for receiving the respective packaging unit based on the read out data with respect to the dimensioning of the packaging unit.

The present invention also refers to a method for mailing a packaging unit in a system explained above comprising at least the steps of: providing at least one packaging unit having at least one memory means and at least one transmitting/receiving means, wherein at least data with respect to the dimensioning of the packaging unit, the empty weight of the packaging unit and an identifier for identifying the packaging unit is stored in the memory unit; and providing at least one input and transmitting device which is configured to provide a data exchange with the transmitting/receiving means of the packaging unit and to read out at least the data with respect to the dimensioning of the packaging unit, the empty weight of the packaging unit and the identifier for identifying the packaging unit; inputting data with respect to a recipient of the packaging unit by means of inputting means of the input and transmitting device; reading out the data with respect to the dimensioning of the packaging unit, the empty weight of the packaging unit and the identifier of the packaging unit from the memory means of the packaging unit by means of the input and transmitting device and combining this data with the inputted data with respect to the recipient of the packaging unit.

It is preferred that the method further comprises the step of generating mailing data configured to be used in an system for mailing a packaging unit. Thereby, an overview of the mailing data can be provided to a user. Moreover, it is preferred that all data can be adapted, deleted or supplemented again in such an overview. In addition, it is also possible that further comments can be added to the mailing data. For each mailing, a mailing report can be provided, which can be provided to an user, for example at the end of each month together with the respective invoice. Such an mailing report might include the mailing details, the users data and the recipient data.

It is further preferred that the method is executed on at least one computer device, wherein the computer device is preferably a mobile computer device, like a smartphone, a tablet or a mobile computer. For example, the present method can be implemented in a computer executable program, like an application software (App) executable on a smartphone. Notably, it is possible that all above method steps are performed on a mobile computer device, wherein in this case, it is preferred that the one or more database are also provided on the mobile computer device. However, in this case it is preferred that the one or more databases are is individualized for a specific user.

Preferably, the method further comprises the step of analyzing the data at least with respect to a recipient of the packaging unit by means of an analyzing algorithm which is preferably executed on a mobile computer device, like a smartphone, a tablet or a mobile computer

The present invention also relates to the use of a packaging unit in a system and/or method explained above, wherein the packaging unit comprises at least one memory means and at least one transmitting/receiving means, wherein at least data with respect to the dimensioning of the packaging unit, the empty weight of the packaging unit and an identifier for identifying the packaging unit is stored in the memory unit.

Moreover, the present invention also relates to the use of an input and transmitting device in a system and/or method explained above, wherein the input and transmitting device is preferably a mobile computer device, like a smartphone, a tablet or a mobile computer.

Finally, the present invention also relates to the use of one or more databases in a system and/or method explained above, wherein the one or more databases comprises personal data of an user, address data of an user and/or recipients, information about service providers, terms of service providers and/or information about packaging terminals and/or combined data with respect to the dimensioning of the packaging unit, the empty weight of the packaging unit, the identifier of the packaging unit and the recipient of the packaging unit.

In the following an example of a preferred method for mailing a packaging unit according to the present invention is explained. A cuboid or cubic-shaped packaging unit is provided with an NFC tag on all six sides. All six NFC tags may contain the same information, namely: an identifier for the packaging unit, *e.g.* an unique number, data indicating the external dimensions of the packaging unit and the net weight of the packaging unit. Notably, six tags are used to ensure that if one tag fails, the shipping packaging can still be used.

By means of an application software (app) stored and executable on a smartphone, the user can perform a registering procedure by log in with his address data and account data. In this respect, it is further preferred that initially the user has to transmit a photo of his identity card and/or tax ID number such that the identity of the user can be verified. These data can also be stored for future shipments/mailings. In the preferred embodiment, the user pays a monthly fee for being able to use the mailing system for mailing packaging units. After a successful registration, each user receives a packaging unit, free of charge or can pick it up at the next packaging terminal. It can be exchanged free of charge at any postal station or delivery point of the participating service providers, if it is defective or damaged so that it can no longer be transported.

In the case of a planned mailing, the user opens the application software and enters the recipient or adds a recipient from his address book stored on his smartphone. The user then places his smartphone on the packaging unit with the NFC tags. One of the NFC tags transmits the size of the packaging unit, the weight of the packaging unit and the identifier. The application software now combines the this data with the previously entered mailing data, *e.g.* at least the data with respect to the sender and the recipient. The application software now displays various transport service providers to the user which are available for mailing the packaging unit. The price conditions and the next packaging terminal, delivery station or delivery point of the transport service providers can also be indicated. After selecting one of the service providers, the user might select further services, which are offered by the selected transport service provider.

As an alternative, the user will no longer be shown any transport service providers. Instead, contracts are agreed with all available transport service providers and prices are defined. Depending on the conditions, a distribution is set up in the background that distributes a certain percentage of package units to each transportation service provider. Once the user has selected his services, the data is transferred to the transportation service provider determined using the distribution key and the user is finally shown who is transporting his package unit and the options for delivering the package unit.

After saving his selection, the user receives a mailing overview. Once the mailing has been sent, the user is invoiced directly for the mailing and the mailing is transferred directly to the transport service provider's system.

As an option, the user can transmit to the NFC tags the actual weight of the packaging unit. During the mailing process, the actual weight including the weight of the packaging can then be transmitted and, for example, a discount can be granted by the service provider.

For example, in case the user delivers the packaging unit to a packaging terminal, the packaging terminal can be modified in such a way that it can read out the NFC tags. When the NFC tag is read out, a door that matches the size of the packaging unit opens automatically and the user only has to insert the packaging unit. No further information is required, as the NFC tag provides clear information about the sender and recipient.

The packaging terminal can be that of the respective transport service provider or a separate packaging terminal that receives all packaging unit for several transport service providers. When the service person of a transport service provider arrives at the generally valid packaging terminal, he identifies himself as the service person of the corresponding transport service provider and the doors open in which the packaging unit for this transport service provider are located. When the packaging unit is picked up by the transport service provider from the packaging terminal, it is preferred that the service persons are equipped with handheld NFC devices. Thus, the service person picks up the packaging unit by simply placing his handheld on the packaging unit.

It is further preferred that each additional station within the transport service provider is equipped with NFC capability so that the data can be read out and transmitted to a tracking system at any time.

As a result, the system and method according to the present invention provides a system and a method for simplifying the mailing of packaging units and also a more environmentally friendly system and method for mailing packaging units. This is because by means of the present invention no labels are needed any more, since the package units are sent neutrally, wherein it is still possible to identify an user/sender by his identity card and/or tax ID number. Thereby, a packaging unit can be used several times and can be handled in a returnable system. Moreover, postage costs can be reduced through a simplified integration of several transport service providers.

### BRIEF DESCRIPTION OF THE DRAWINGS

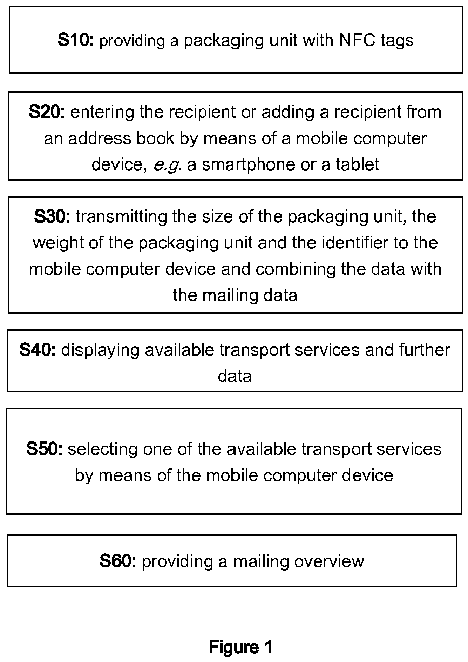

In the following, the invention is described exemplarily with reference to the enclosed figure, in which
- **Figure 1**: is a schematic view of a method according to the preferred embodiment of the present invention applied in a system according to the preferred embodiment of the invention.

### DETAILED DESCRIPTION OF EMBODIMENT

Figure 1 is a schematic view of a method according to the preferred embodiment of the present invention. In the following, an exemplary order of the steps according to the present invention is explained. However, the provided order is not mandatory, *i.e.* all or several steps may be performed in a different order or simultaneously. It is preferred that the method is executed on at least one computer device, like a smartphone, a tablet or a mobile computer. For example, the present method can be implemented in a computer executable program, like an application software (App) executable on a mobile computer, like a smartphone.

In step S10, a cuboid or cubic-shaped packaging unit is provided comprising an NFC tag on all six sides. All six NFC tags contain the same information, namely: an identifier for the packaging unit, *e.g.* an unique number, data indicating the external dimensions of the packaging unit and the net weight of the packaging unit.

In step S20, the user opens the application software and enters the mailing data, *e.g.* the data with respect to the recipient or adds recipient data from his address book stored on his smartphone. In step S30, the user then places his smartphone on the packaging unit with the NFC tags. By means of the NFC tags the size of the packaging unit, the weight of the packaging unit and the identifier is transmitted. The application software then combines this data with the previously entered mailing data, *e.g.* at least the data with respect to the sender and the recipient.

In step S40, the application software displays various transport service providers to the user which are available for mailing the packaging unit. The price conditions and the next packaging terminal, delivery station or delivery point of the transport service providers can also be indicated.

In step S50, the user select one of the various transport service providers, wherein the user might select further services, which are offered by the selected transport service provider.

In step S60, the user receives a mailing overview. Once the mailing has been sent, the user is invoiced directly for the mailing and the mailing is transferred directly to the transport service provider's system.

As an option, the user can transmit to the NFC tags the actual weight of the packaging unit. During the mailing process, the actual weight including the weight of the packaging can then be transmitted and, for example, a discount can be granted by the service provider.

Notably, in the preferred embodiment, the user is able to deliver the packaging unit to a packaging terminal, wherein the packaging terminal is modified in such a way that it can read out the NFC tags. When the NFC tag is read out, a door that matches the size of the packaging unit opens automatically and the user only has to insert the packaging unit. The packaging terminal can be that of the respective transport service provider or a separate packaging terminal that receives all packaging unit for several transport service providers. When the service person of a transport service provider arrives at the generally valid packaging terminal, he identifies himself as the service person of the corresponding transport service provider and the doors open in which the packaging unit for this transport service provider are located. When the packaging unit is picked up by the transport service provider from the packaging terminal, it is preferred that the service persons are equipped with handheld NFC devices. Thus, the service person picks up the packaging unit by simply placing his handheld on the packaging unit.

The present invention has been described in conjunction with a preferred embodiment as examples as well. However, other variations can be understood and effected by those persons skilled in the art and practicing the claimed invention, from the studies of the drawings, this disclosure and the claims.

Notably, in particular the steps S10 to S60 can be performed in any order, *i.e.* the present invention is not limited to a specific order of these steps. Moreover, it is also not required that the different steps are performed at a certain place or at one place, *i.e.* each of the steps may be performed at a different place using different equipment/data processing units. In the claims as well as in the description the word *"comprising"* does not exclude other elements or steps and the indefinite article *"a"* or *"an"* does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

### REFERENCE SIGNS

- **S10**: providing a packaging unit with NFC tags
- **S20**: entering the recipient or adding a recipient from an address book by means of a mobile computer device, *e.g*. a smartphone or a tablet
- **S30**: transmitting the size of the packaging unit, the weight of the packaging unit and the identifier to the mobile computer device and combining the data with the mailing data
- **S40**: displaying available transport services and further data
- **S50**: selecting one of the available transport services by means of the mobile computer device
- **S60**: providing a mailing overview

## Claims

1. System for mailing a packaging unit comprising:
at least one packaging unit having at least one memory means and at least one transmitting/receiving means, wherein at least data with respect to the dimensioning of the packaging unit, the empty weight of the packaging unit and an identifier for identifying the packaging unit is stored in the memory unit; and
at least one input and transmitting device which is configured to provide a data exchange with the transmitting/receiving means of the packaging unit and to read out at least the data with respect to the dimensioning of the packaging unit, the empty weight of the packaging unit and the identifier for identifying the packaging unit.

2. System according to claim 1, wherein the input and transmitting device is a mobile computer device, a smartphone or a tablet.

3. System according to claim 1 or 2, wherein the packaging unit comprises on each of its sides at least one transmitting/receiving means, wherein the packaging unit preferably has a cubic shape and at least one transmitting/receiving means is provided on all six sides of the packaging unit.

4. System according to any one of the preceding claims, wherein the transmitting/receiving means of the packaging unit are provided as near-field communication means, wherein the transmitting/receiving means of the packaging unit are preferably provided as NFC tag or RFID tag.

5. System according to any one of the preceding claims, wherein the system further comprises one or more databases in which personal data of an user, address data of an user and/or recipients, information about service providers, terms of service providers and/or information about packing terminals are included.

6. System according to any one of the preceding claims, wherein the input and transmitting device comprises at least one inputting means configured for inputting personal data of an user, address data of an user and/or recipients, wherein the input and transmitting device is preferably configured to add these data to the one or more databases.

7. System according to any one of the preceding claims, wherein the input and transmitting device comprises at least one inputting means configured for inputting the packed weight of the packaging unit and to transmit the packed weight of the packaging unit to the storage means of the packaging unit and/or to transmit the packed weight of the packaging unit together with the identifier for identifying the packaging unit to the one or more databases.

8. System according to any one of the preceding claims, wherein the system further comprises packaging terminals comprising several storage boxes each configured to receive one or more packaging units, wherein the packaging terminal comprise transmitting/receiving means configured to provide a data exchange with the transmitting/receiving means of the packaging unit and to read out at least the data with respect to the dimensioning of the packaging unit and the identifier for identifying the packaging unit, wherein the packaging terminals are preferably configured to automatically open a suitable storage box for receiving the respective packaging unit based on the read out data with respect to the dimensioning of the packaging unit.

9. Method for mailing a packaging unit in a system according to any one of the claims 1 to 8 comprising the steps of :
providing at least one packaging unit having at least one memory means and at least one transmitting/receiving means, wherein at least data with respect to the dimensioning of the packaging unit, the empty weight of the packaging unit and an identifier for identifying the packaging unit is stored in the memory unit; and
providing at least one input and transmitting device which is configured to provide a data exchange with the transmitting/receiving means of the packaging unit and to read out at least the data with respect to the dimensioning of the packaging unit, the empty weight of the packaging unit and the identifier for identifying the packaging unit;
inputting data with respect to a recipient of the packaging unit by means of inputting means of the input and transmitting device;
reading out the data with respect to the dimensioning of the packaging unit, the empty weight of the packaging unit and the identifier of the packaging unit from the memory means of the packaging unit by means of the input and transmitting device and combining this data with the inputted data with respect to the recipient of the packaging unit.

10. Method according to claim 9, wherein the method further comprises the step of generating mailing data configured to be used in an system for mailing a packaging unit.

11. Method according to claim 9 or 10, wherein the method is executed on at least one computer device, wherein the computer device is preferably a mobile computer device, like a smartphone, a tablet or a mobile computer.

12. Method according to any one of claims 9 to 11, wherein the method further comprises the step of analyzing the data at least with respect to a recipient of the packaging unit by means of an analyzing algorithm which is preferably executed on a mobile computer device, like a smartphone, a tablet or a mobile computer

13. Use of a packaging unit in a system according to any one of the claims 1 to 9 and/or in a method according to any one of the claims 9 to 11, wherein the packaging unit comprises at least one memory means and at least one transmitting/receiving means, wherein at least data with respect to the dimensioning of the packaging unit, the empty weight of the packaging unit and an identifier for identifying the packaging unit is stored in the memory unit.

14. Use of an input and transmitting device in a system according to any one of the claims 1 to 9 and/or in a method according to any one of the claims 9 to 11, wherein the input and transmitting device is preferably a mobile computer device, like a smartphone, a tablet or a mobile computer.

15. Use of one or more databases in a system according to any one of the claims 1 to 9 and/or in a method according to any one of the claims 9 to 11, wherein the one or more databases comprises personal data of an user, address data of an user and/or recipients, information about service providers, terms of service providers and/or information about packaging terminals and/or combined data with respect to the dimensioning of the packaging unit, the empty weight of the packaging unit, the identifier of the packaging unit and the recipient of the packaging unit.
